# EUROPÄISCHE PATENTANMELDUNG

(11) **EP 1 545 137 A2**
(43) Veröffentlichungstag der Anmeldung: **22.06.2005**
(21) Anmeldenummer: 04027351.8
(22) Anmeldetag: 18.11.2004
(51) Int. Cl.: H04Q 1/00, H04M 3/42

(54) **Telekommunikationsanlage mit Netzwerkanschluss für Rechnereinrichtungen**

(30) Priorität: 15.12.2003 DE 10358995
(71) Anmelder: DeTeWe-Deutsche Telephonwerke AKG & Co. KG, 10997 Berlin (DE)
(72) Erfinder: Wilkening, Volker, Dr. Dipl.-Ing., 24582 Bordelsholm (DE); Rehse, Udo, Ing., 13457 Berlin (DE)

(57) **Zusammenfassung**

Die Erfindung bezieht sich auf eine Telekommunikationsanlage mit zumindest einem Anschluss (20) für das öffentliche Telekommunikationsnetz (25) und mit zumindest einem Anschluss für ein Telekommunikationsendgerät (100-130).

Der Erfindung liegt bezüglich einer solchen Telekommunikationsanlage die Aufgabe zugrunde, ein besonders hohes Maß an Benutzerfreundlichkeit zu erreichen.

Diese Aufgabe wird erfindungsgemäß dadurch gelöst, dass die Telekommunikationsanlage (10) mindesten einen Netzwerkanschluss (30) aufweist, an den mindestens zwei Rechnereinrichtungen (70, 80) an die Telekommunikationsanlage (10) anschließbar sind, und die Telekommunikationsanlage (10) eine Steuereinrichtung (150) besitzt, die den Netzwerkanschluss (30) derart betreibt, dass zwischen der Telekommunikationsanlage (10) und den mindestens zwei Rechnereinrichtungen (70, 80) Sprachdaten bidirektional übertragbar sind, wobei die Sprachdatenübertragung derart ausgestaltet ist, dass jede an die Telekommunikationsanlage (10) angeschlossene Rechnereinrichtung (70, 80) als Telefon und/oder als Faxgerät betreibbar ist, und wobei die Steuereinrichtung (150) derart ausgestaltet ist, dass jeder angeschlossenen Rechnereinrichtung (70, 80) zumindest eine eigene Telefonnummer zugeordnet werden kann.

## Beschreibung

Die Erfindung bezieht sich auf eine Telekommunikationsanlage - fachsprachlich auch "TK-Anlage" genannt - mit zumindest einem Anschluss für das öffentliche Telekommunikationsnetz und mit zumindest einem Anschluss für ein Telekommunikationsendgerät.

Der Erfindung liegt bezüglich einer solchen Telekommunikationsanlage die Aufgabe zugrunde, ein besonders hohes Maß an Benutzerfreundlichkeit zu erreichen.

Diese Aufgabe wird erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass die Telekommunikationsanlage mindestens einen Netzwerkanschluss bzw. LAN-Anschluss (LAN: Local Area Network) aufweist, an den zumindest zwei Rechnereinrichtungen "gleichzeitig" anschließbar sind. Die Telekommunikationsanlage weist darüber hinaus eine Steuereinrichtung auf, die den Netzwerkanschluss derart betreibt, dass zwischen der Telekommunikationsanlage und den zumindest zwei Rechnereinrichtungen Sprachdaten bidirektional übertragbar sind. Die Sprachdatenübertragung ist derart ausgestaltet, dass jede der angeschlossenen Rechnereinrichtungen als Telefon und/oder als Faxgerät betrieben werden kann. Die Steuereinrichtung ist darüber hinaus derart ausgebildet, dass jeder angeschlossenen Rechnereinrichtung jeweils zumindest eine eigene Telefonnummer zugeordnet werden kann.

Ein wesentlicher Vorteil der erfindungsgemäßen Telekommunikationsanlage besteht darin, dass aufgrund des Netzwerk- bzw. LAN-Anschlusses (LAN: Local Area Network) mehrere Rechnereinrichtungen an die Telekommunikationsanlage und damit mittelbar auch an das öffentliche Telekommunikationsnetz anschließbar sind, ohne dass jede Rechnereinrichtung dafür ein eigenes Modem benötigt; denn die Telekommunikationsanlage stellt als Ersatz einen Netzwerkanschluss zur Verfügung.

Ein weiterer wesentlicher Vorteil der erfindungsgemäßen Telekommunikationsanlage besteht darin, dass die an die Telekommunikationsanlage angeschlossenen Rechnereinrichtungen darüber hinaus als konventionelle Telefone bzw. konventionelle Faxgeräte betrieben werden können. Dies wird bei der erfindungsgemäßen Telekommunikationsanlage dadurch erreicht, dass zwischen den angeschlossenen Rechnereinrichtungen und der Telekommunikationsanlage jeweils Sprachdaten derart übertragen werden können, dass ein Telefon- bzw. Faxbetrieb möglich ist. Gewährleistet wird ein solcher herkömmlicher "Telefonbetrieb" durch ein geeignetes Datenformat, das sowohl von der Telekommunikationsanlage als auch von den angeschlossenen Rechnereinrichtungen verstanden wird; wie das Datenformat konkret ausgestaltet ist, ist quasi beliebig.

Ein dritter wesentlicher Vorteil der erfindungsgemäßen Telekommunikationsanlage ist darin zu sehen, dass jede an die Telekommunikationsanlage angeschlossene Rechnereinrichtung darüber hinaus auch von außen wie ein konventionelles Telefon bzw. Faxgerät ansprechbar ist und angerufen werden kann, da jeder Rechnereinrichtung jeweils eine eigene Telefonnummer zugeordnet werden kann.

Ein vierter wesentlicher Vorteil der erfindungsgemäßen Telekommunikationsanlage besteht darin, dass eine Vielzahl an Rechnereinrichtungen gleichzeitig an die Telekommunikationsanlage angeschlossen werden kann und über das Netzwerk bzw. "LAN" miteinander und mit der Telekommunikationsanlage kommunizieren kann. Es wird also eine Punkt-zu-Mehrpunkt-Verbindung anstelle einer einfachen Punkt-zu-Punkt Verbindung ermöglicht.

Ein besonders geeignetes Netzwerk bildet beispielsweise das ETHERNET-Netzwerk; es wird somit als vorteilhaft angesehen, wenn der mindestens eine Netzwerkanschluss ein ETHERNET-Netzwerkanschluss ist, der von der Steuereinrichtung im ETHERNET-Modus betrieben wird.

Um sicherzustellen, dass die Sprachdaten, also die "Telefongesprächsdaten" und/oder die "Faxdaten" quasi unverzögert übertragen werden, so dass benutzerseitig der Eindruck entsteht, dass eine "Standleitung" bestünde, wird es als vorteilhaft angesehen, wenn die Sprachdaten transparent bzw. "bittransparent" übertragen werden. Um diese transparente Übertragung zu erreichen, ist es lediglich wichtig, dass eine ausreichende Datenrate von zumindest 64 Kbit/s gewährleistet wird.

Als besonders vorteilhaft wird es angesehen, wenn die Steuereinrichtung darüber hinaus Aufwecksignale erzeugt und über das Netzwerk bzw. das LAN sendet. Bei dem Aufwecksignal kann es sich vorteilhaft beispielsweise um ein sogenanntes "wake-up-on-LAN-Signal" handeln. Ein solches Aufwecksignal ermöglicht es, dass die Rechnereinrichtungen dauerhaft in einem Stromsparmodus bzw. Sleep-Modus betrieben werden und dabei trotzdem wie ein "Telekommunikationsendgerät" von außen erreichbar bleiben. Sobald nämlich ein Telefonanruf in der Telekommunikationsanlage eingeht, der für eine der angeschlossenen Rechnereinrichtungen bestimmt ist, so wird die Steuereinrichtung ein Aufwecksignal erzeugen, um die betroffene Rechnereinrichtung aus ihrem Schlafmodus (sleep-Modus) aufzuwecken und in Betrieb zu setzen. Rechnerseitig ist diesbezüglich lediglich erforderlich, dass die angeschlossenen Rechnereinrichtungen auch im Schlafbetrieb bzw. Sleep-Modus regelmäßig ihren Netzwerkanschluss auf das Vorliegen eines solchen Aufwecksignals überwachen und sich ggf. selbst in Betrieb setzen.

Der mindestens eine Anschluss der Telekommunikationsanlage für das öffentliche Telekommunikationsnetz ist bevorzugt ein ISDN-Anschluss, denn ISDN-Anschlüsse ermöglichen unter anderem den Anschluss gleichzeitig mehrerer Telekommunikationsendgeräte.

Darüber hinaus wird es als vorteilhaft angesehen, wenn die Telekommunikationsanlage zusätzlich zu dem ISDN-Anschluss oder alternativ zu dem ISDN-Anschluss einen DSL-Anschluss und/oder einen Anschluss für Kabelfernsehen - nachfolgend kurz "Kabelanschluss" genannt - aufweist, mit dem die Telekommunikationsanlage zusätzlich an das öffentliche Kommunikationsnetz anschließbar ist. Über einen DSL (DSL: Digital Subscriber Line)-Anschluss bzw. über einen Kabelanschluss lassen sich nämlich Daten mit sehr hoher Datenrate übertragen, wodurch beispielsweise die Wartezeiten bei der Benutzung des Internets für an die Telekommunikationsanlage angeschlossene Rechnereinrichtungen deutlich reduziert wird.

Bei dem DSL-Anschluss kann es sich beispielsweise um einen ADSL-(ADSL: Asymmetric Digital Subscriber Line )-Anschluss handeln.

Darüber hinaus wird es als vorteilhaft angesehen, wenn die Telekommunikationsanlage ein Modem aufweist oder mit einem externen Modem in Verbindung steht, das einerseits mit dem mindestens einen Netzwerkanschluss und andererseits mit dem DSL-Anschluss oder dem Kabelanschluss in Verbindung steht. Ein solches Modem gewährleistet die Anpassung des Datenübertragungsverfahrens im DSL- bzw. Kabel-Leitungssystem an das Datenübertragungssystem des Netzwerkes bzw. LAN's der Telekommunikationsanlage. Der externe Anschluss des Modems bildet dann den externen DSL- bzw. Kabelanschluss der Telekommunikationsanlage.

Vorzugsweise ist zwischen dem Modem und dem Netzwerkanschluss der Telekommunikationsanlage einerseits und den Rechnereinrichtungen und dem Modem andererseits eine Schalteinrichtung, insbesondere ein sogenannter "Switch", angeordnet; diese Schalteinrichtung ermöglicht eine Verbindung zwischen der Telekommunikationsanlage und dem Modem einerseits sowie eine Verbindung zwischen den Rechnereinrichtungen und der Telekommunikationsanlage andererseits. Eine solche Schalteinrichtung bzw. ein solcher Switch ermöglicht es außerdem, dass die an die Telekommunikationsanlage angeschlossenen Rechnereinrichtungen die Telekommunikationsanlage als "Router" benutzen und über die als "Router" arbeitende Telekommunikationsanlage auf das mit der Telekommunikationsanlage in Verbindung stehende Modem und damit auf die DSL-Leitung oder den Kabel-Anschluss zugreifen.

Um einen solchen Zugriff auf die Telekommunikationsanlage zu unterstützen, weist die Telekommunikationsanlage bevorzugt zusätzlich einen Router auf.

Vorteilhaft weist der Router einen DHCP-Server zur automatischen Vergabe von IP-Netzwerkadressen und/oder eine Fire-Wall-Funktion auf.

Zumindest eine der Rechnereinrichtungen kann darüber hinaus per Funkverbindung an den LAN-Anschluss der Telekommunikationsanlage angeschlossen sein. Weist nämlich die Telekommunikationsanlage eine solche Funkschnittstelle auf, so kann eine Rechnereinrichtung mit der Telekommunikationseinrichtung in eine Telefon- bzw. Datenverbindung gebracht werden, ohne dass es einer Drahtverbindung bedarf. Die Rechnereinrichtung ist also "mobil".

Die Funkschnittstelle wird vorteilhaft durch eine mit dem Netzwerk bzw. LAN verbundene Kartenbuchse gebildet, in die eine Mobilfunkkarte lösbar einschiebbar ist. Weist die Telekommunikationsanlage eine solche Kartenbuchse auf, so kann durch Auswechseln der Mobilfunkkarten ein Funkbetrieb mit verschiedenen Funkstandards ausgewählt werden.

Die Mobilfunkkarte kann beispielsweise eine sogenannte "Compact-Flashkarte" sein.

Bei der Kartenbuchse handelt es sich bevorzugt um eine CF 11-Buchse, da eine solche Buchse "hotplug-fähig" sein kann, also in Betrieb genommen werden kann, ohne dass die Telekommunikationsanlage zuvor außer Betrieb genommen werden muss.

Zum Übertragen von Sprach- und Datensignalen hat sich der DECT-Funkstandard bewährt, so dass es als vorteilhaft angesehen wird, wenn die Mobilfunkkarte nach dem DECT-Standard arbeitet.

Alternativ kann die Mobilfunkkarte auch nach dem WiFi-Standard arbeiten, so dass eine Vielzahl von Rechnereinrichtungen gleichzeitig mit der Telekommunikationsanlage "kabelfrei" in eine Datenverbindung eintreten kann.

Die Erfindung bezieht sich darüber hinaus auf ein Verfahren zum Betrieb einer Telekommunikationsanlage, insbesondere einer Telekommunikationsanlage nach einem der vorangehenden Ansprüche.

Diesbezüglich liegt der Erfindung die Aufgabe zugrunde, ein besonders hohes Maß an Benutzerfreundlichkeit zu erreichen.

Diese Aufgabe wird erfindungsgemäß durch die kennzeichnenden Merkmale des Anspruchs 18 gelöst.

Vorteilhafte Ausgestaltungen des erfindungsgemäßen Verfahrens sind in auf den Anspruch 18 rückbezogenen Unteransprüchen angegeben.

Danach erfindungsgemäß vorgesehen, dass an die Telekommunikationsanlage über zumindest einen Netzwerkanschluss (LAN-Anschluss) eine Mehrzahl an Rechereinrichtungen - zumindest zwei Rechereinrichtungen - an die Telekommunikationsanlage angeschlossen wird. Über das Netzwerk werden zwischen der Telekommunikationsanlage und den Rechnereinrichtungen Sprachdaten bidirektional übertragen, so dass jede angeschlossene Rechnereinrichtung als Telefon und/oder als Faxgerät betrieben werden kann.

Darüber hinaus wird jeder angeschlossenen Rechnereinrichtungen jeweils zumindest eine eigene Telefonnummer zugeordnet, damit auch von außen - also für externe über das öffentliche Telekommunikationsnetz anrufende oder für interne mit der Telekommunikationsanlage verbundene "Anrufer" - eine unmittelbare Erreichbarkeit gewährleistet wird.

Bezüglich der Vorteile des erfindungsgemäßen Verfahrens wird auf die Vorteile der erfindungsgemäßen Telekommunikationsanlage (TK-Anlage) verwiesen, da die Vorteile der Telekommunikationsanlage im wesentlichen den Vorteilen des erfindungsgemäßen Verfahrens entsprechen.

Selbstverständlich ist es außerdem möglich, dass die an den LAN-Anschluss angeschlossenen Rechnereinrichtungen untereinander bzw. mit dem DSL- oder Kabelnetz bzw. Internet zusätzlich oder alternativ in anderen Daten- bzw. Signalformaten als mit der Telekommunikationsanlage kommunizieren.

Zur Erläuterung der Erfindung zeigen
- Figur 1: ein erstes Ausführungsbeispiel einer erfindungsgemäßen Telekommunikationsanlage mit einem externem Modem und einem externen Switch und
- Figur 2: ein zweites Ausführungsbeispiel einer erfindungsgemäßen Telekommunikationsanlage mit einem integrierten Modem und einem externen Switch.

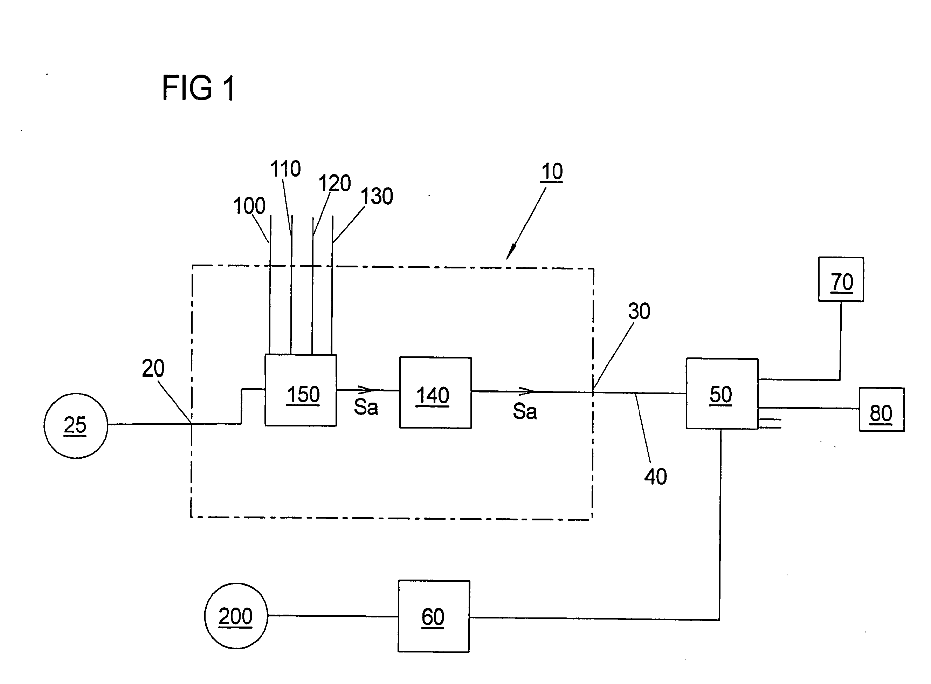

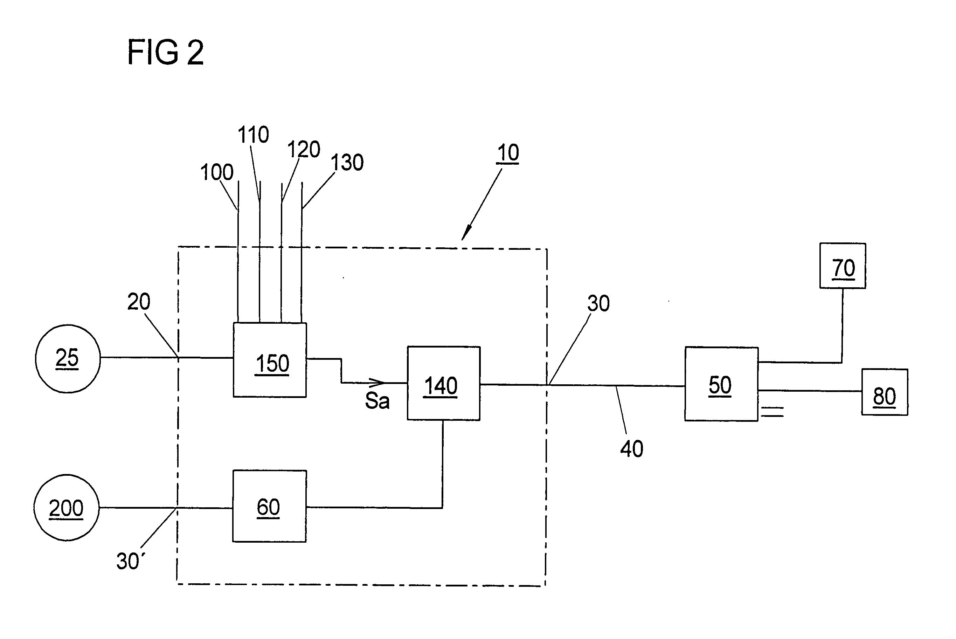

Das erfindungsgemäße Verfahren lässt sich mit jeder der in den Figuren 1 und 2 dargestellten Telekommunikationsanlagen durchführen.

In den Figuren 1 und 2 werden ist für identische oder vergleichbare Komponenten dieselben Bezugszeichen verwendet.

In der Figur 1 erkennt man eine Telekommunikationsanlage 10 mit einem Anschluss 20 für das öffentliche Telekommunikationsnetz. Bei dem Anschluss 20 handelt sich um einen ISDN-Anschluss, mit dem die Telekommunikationsanlage 10 an ein ISDN-Netz 25 angeschlossen ist.

Die Telekommunikationsanlage 10 weist darüber hinaus einen Netzwerkanschluss 30 auf, mit dem ein LAN-Netzwerk 40 an die Telekommunikationsanlage 10 angeschlossen ist. Bei dem LAN-Netzwerk handelt es sich um ein ETHERNET-Netzwerk.

An das LAN-Netzwerk 40 ist eine Schalteinrichtung bzw. ein externer "Switch" 50 angeschlossen, der einerseits mit einem externen Modem 60 und andererseits mit einer Vielzahl an Rechnereinrichtungen in Verbindung steht, von denen in der Figur 1 der Übersicht halber lediglich zwei Rechnereinrichtungen 70 und 80 eingezeichnet sind.

Die Telekommunikationsanlage 10 weist darüber hinaus vier analoge Anschlüsse 100, 110, 120 und 130 auf, mit denen herkömmliche analoge oder digitale Telekommunikationsendgeräte an die Telekommunikationsanlage 10 anschließbar sind.

Die Telekommunikationsanlage 10 weist außerdem einen internen Router 140 auf, der mit dem ETHERNET-Netzwerk 40 in Verbindung steht. Der Router 140 ist mit einer Steuereinrichtung 150 verbunden, die an den ISDN-Anschluss 20 und damit an das ISDN-Netz 25 angeschlossen ist sowie mit den vier analogen Anschlüssen 100, 110, 120 und 130 in Verbindung steht.

Das Modem 60 bildet einen Anschluss an ein DSL- und/oder Kabelnetz (Kabelfernseh-Netz) 200.

Die Anordnung gemäß der Figur 1 wird wie folgt betrieben:

Von der Steuereinrichtung 150 der Telekommunikationsanlage 10 wird jeder über das LAN-Netzwerk 40 angeschlossenen Rechnereinrichtung 70 und 80 jeweils eine eigene Telefonnummer zugeordnet. Somit ist es möglich, über das ISDN-Netz 25 - also von "extern" - die Rechnereinrichtungen 70 oder 80 unmittelbar anzurufen, um Sprachdaten, also "Telefongesprächsdaten" und/oder "Faxdaten", zu der Rechnereinrichtung 70 bzw. 80 oder umgekehrt zu übertragen.

Die Verbindung zwischen den Rechnereinrichtungen 70 und 80 sowie dem ISDN-Netz wird von der Steuereinrichtung 150, dem Router 140 und dem Switch 50 bereitgestellt.

Durch die Zuordnung der Rufnummern an die Rechnereinrichtungen 70 und 80 ist es darüber hinaus möglich, dass die Rechnereinrichtungen 70 und 80 als Telekommunikationsendgeräte Sprachdaten untereinander sowie auch mit "internen" Telekommunikationsendgeräten austauschen, die an die vier analogen Telekommunikationsanschlüsse 100, 110, 120 und 130 angeschlossen sind; es ist also auch ein "interner" "Sprachdaten-Betrieb" möglich. Der interne Sprachdaten-Betrieb wird im Falle einer Sprachdaten-Übertragung zwischen den Rechnereinrichtungen 70 und 80 ausschließlich von dem Switch 50 verwaltet; im Falle einer internen Sprachdaten-Übertragung zwischen einer der Rechnereinrichtungen 70 und 80 und einem internen, an einen der Anschlüsse 100 bis 130 angeschlossenen Telekommunikationsendgerät erfolgt die Gesprächsvermittlung außerdem über den Router 140 und die Steuereinrichtung 150.

Über die Schalteinrichtung bzw. den Switch 50 können die Rechnereinrichtungen 70 und 80 darüber hinaus auf das Modem 60 und damit auf das mit dem Modem 60 in Verbindung stehende DSL- oder Kabelnetz 200 zugreifen, um in üblicher Weise beispielsweise mit dem Internet in Verbindung zu treten. Hierzu werden die Rechnereinrichtungen 70 und 80 von dem Switch 50 mit dem Router 140 verbunden, der wiederum die Verbindung mit dem Modem 60 und damit mit dem DSL- bzw. Kabelnetz 200 herstellt.

Zusammengefasst ist es damit möglich, die Rechnereinrichtungen 70 und 80 wie herkömmliche Telekommunikationsendgeräte zu betreiben, um beispielsweise Telefongesprächsdaten oder Faxinformationen über das LAN-Netzwerk 40 in das ISDN-Netz 25 einzuspeisen. Darüber hinaus ist es möglich, über das ISDN-Netz 25 unmittelbar auf jede der Rechnereinrichtungen 70 und 80 direkt zuzugreifen, weil jeder Rechnereinrichtung 70 und 80 jeweils eine eigene Rufnummer zugeordnet ist. Darüber hinaus kann jede Rechnereinrichtung 70 und 80 über die Schalteinrichtung 50 auch auf den Router 140 zugreifen, um in üblicher Weise eine Verbindung zum DSL-Netz bzw. Kabelnetz 200 und damit zum Internet zu erlangen. Auch ist eine interne Sprachdatenübertragung zwischen Rechnereinrichtungen 70 und 80 untereinander und zwischen Rechnereinrichtungen und Telekommunikationsendgeräten an den Anschlüssen 100 bis 130 möglich.

Das LAN-Netzwerk 40 bietet somit eine "Punkt zu Mehrpunkt"-Verbindung, mit der sich eine Mehrzahl an Rechnereinrichtungen an die Telekommunikationsanlage 10 anschließen lässt.

Die Telekommunikationsanlage 10 bzw. die Steuereinrichtung 150 stellt darüber hinaus einen Aufweckmodus zur Verfügung, um Aufwecksignale Sa für die an das LAN-Netzwerk 40 angeschlossenen Rechnereinrichtungen 70 und 80 zu erzeugen. Solche Aufwecksignale, bei denen sich beispielsweise um "wake-up-on-LAN"-Signale handelt, ermöglichen es, die Rechnereinrichtungen 70 und 80 in einem Sleep-Modus bzw. Stromsparmodus zu betreiben. In diesem Sleep-Modus bzw. Stromsparmodus sind die Rechnereinrichtungen 70 und 80 im Wesentlichen außer Betrieb gesetzt; die Rechnereinrichtungen überwachen lediglich das LAN-Netzwerk 40 auf das Vorhandensein der gegebenenfalls von der Telekommunikationsanlage 10 generierten Aufwecksignale, um sich selbst wieder in Betrieb zu nehmen.

Die Telekommunikationsanlage 10 erzeugt solche Aufwecksignale vorzugsweise ausschließlich dann, wenn vom ISDN-Netz 25 oder von internen Anrufern - also von den an die Anschlüsse 100 bis 130 angeschlossenen Telekommunikationsendgeräten oder anderen an das LAN-Netzwerk angeschlossenen Rechnereinrichtungen - ein Telefonanruf eingeht, der über die Rufnummernzuordnung innerhalb der Steuereinrichtung 150 einer der angeschlossenen Rechnereinrichtungen 70 oder 80 zugeordnet ist.

Darüber hinaus können auch die Rechnereinrichtungen 70 und 80 Aufwecksignale generieren, wenn sie mit einer anderen Rechnereinrichtung kommunizieren und beispielweise direkt Sprachdaten austauschen wollen.

An den Switch 50 können die Rechnereinrichtungen 70 und 80 im Übrigen auch per Funkverbindung angeschlossen sein. Die Funkschnittstelle wird beispielweise durch eine Kartenbuchse gebildet, in die eine Mobilfunkkarte lösbar eingeschoben ist. Die Kartenbuchse wird an einen der Rechneranschlüsse des Switches 50 angeschlossen.

In der Figur 2 erkennt man ein Ausführungsbeispiel einer Telekommunikationsanlage 10 mit zwei Netzwerkanschlüssen 30 und 30'.

An dem einen Netzwerkanschluss 30 ist ein LAN-Netzwerk 40 - beispielsweise ein ETHERNET-Netzwerk - an die Telekommunikationsanlage 10 angeschlossen. Mit dem einen Netzwerkanschluss 30 stehen ein Router 140 der Telekommunikationsanlage 10 und ein externer Switch 50 in Verbindung. An den Switch 50 sind Rechnereinrichtungen 70 und 80 angeschlossen.

An den zweiten Netzwerkanschluss 30' sind ein in der Telekommunikationsanlage 10 angeordnetes internes Modem 60 sowie ein externes DSL- bzw. Kabelnetz 200 angeschlossen. Der Router 140 steht mit dem Modem 60 in Verbindung.

Bezüglich des Betriebsweise wird auf die obigen Ausführungen im Zusammenhang mit der Figur 1 verwiesen, da die Telekommunikationsanlage 10 gemäß der Figur 2 wie die Telekommunikationsanlage 10 gemäß der Figur 1 betrieben werden kann.

### Bezugszeichenliste

- 10: Telekommunikationsanlage
- 20: Anschluss an das öffentliche Telekommunikationsnetz
- 25: ISDN-Netz
- 30: Netzwerkanschluss
- 30': Weiterer Netzwerkanschluss
- 40: LAN-Netzwerk
- 50: Schalteinrichtung bzw. Switch
- 60: Modem
- 70: Rechnereinrichtung
- 80: Rechnereinrichtung
- 100,110,120,130: Analoge Anschlüsse des Telekommunikationsendgeräts
- 140: Router
- 150: Steuereinrichtung
- 200: DSL- bzw. Kabelnetz

## Patentansprüche

1. Telekommunikationsanlage (10) mit zumindest einem Anschluss (20) für das öffentliche Telekommunikationsnetz (25) und mit zumindest einem Anschluss (100, 110, 120, 130) für ein Telekommunikationsendgerät, **dadurch gekennzeichnet, dass**
- die Telekommunikationsanlage (10) mindesten einen Netzwerkanschluss (30) aufweist, an den mindestens zwei Rechnereinrichtungen (70, 80) an die Telekommunikationsanlage (10) anschließbar sind, und
- die Telekommunikationsanlage (10) eine Steuereinrichtung (150) besitzt, die den Netzwerkanschluss (30) derart betreibt, dass zwischen der Telekommunikationsanlage (10) und den mindestens zwei Rechnereinrichtungen (70, 80) Sprachdaten bidirektional übertragbar sind,
- wobei die Sprachdatenübertragung derart ausgestaltet ist, dass jede an die Telekommunikationsanlage (10) angeschlossene Rechnereinrichtung (70, 80) als Telefon und/oder als Faxgerät betreibbar ist, und
- wobei die Steuereinrichtung (150) derart ausgestaltet ist, dass jeder angeschlossenen Rechnereinrichtung (70, 80) zumindest eine eigene Telefonnummer zugeordnet werden kann.

2. Telekommunikationsanlage nach einem der vorangehenden Ansprüche, **dadurch gekennzeichnet, dass** der mindestens eine Netzwerkanschluss (30) ein ETHERNET-Netzwerkanschluss ist, der von der Steuereinrichtung (150) der Telekommunikationsanlage(10) im ETHERNET-Modus betrieben wird.

3. Telekommunikationsanlage nach einem der vorangehenden Ansprüche, **dadurch gekennzeichnet, dass** die Steuereinrichtung (150) der Telekommunikationsanlage (10) derart ausgestaltet ist, dass die Sprachdaten transparent übertragen werden.

4. Telekommunikationsanlage nach einem der vorangehenden Ansprüche, **dadurch gekennzeichnet, dass** die Steuereinrichtung (150) der Telekommunikationsanlage derart ausgestaltet ist, dass sie Aufwecksignale (Sa) erzeugt und über den zumindest einen Netzwerkanschluss (30) zumindest zu jeweils derjenigen Rechnereinrichtung sendet, die von einem Anrufer, insbesondere von einem externen oder einem internen Anrufer, angerufen wird.

5. Telekommunikationsanlage nach einem der vorangehenden Ansprüche, **dadurch gekennzeichnet, dass** der mindestens eine Anschluss für das öffentliche Telekommunikationsnetz (25) durch einen ISDN-Anschluss oder einen Analog-Zugang gebildet ist.

6. Telekommunikationsanlage nach einem der vorangehenden Ansprüche, **dadurch gekennzeichnet, dass** die Telekommunikationsanlage (10) zusätzlich mindestens einen DSL-Anschluss oder einen Kabelanschluss aufweist.

7. Telekommunikationsanlage nach Anspruch 6, **dadurch gekennzeichnet, dass** der DSL-Anschluss oder der Kabelanschluss durch ein externen Modem-Anschluss eines mit dem Netzwerkanschluss (30) in Verbindung stehenden Modems (60) gebildet ist.

8. Telekommunikationsanlage nach Anspruch 7, **dadurch gekennzeichnet, dass** zwischen dem Modem (60) und dem Netzwerkanschluss (30) einerseits und zwischen den Rechnereinrichtungen (70, 80) und dem Netzwerkanschluss (30) andererseits eine Schalteinrichtung (50) angeordnet ist, die eine Verbindung zwischen der Telekommunikationsanlage (10) und dem Modem (60) einerseits und eine Verbindung zwischen den Rechnereinrichtungen (70, 80) und der Telekommunikationsanlage (10) andererseits ermöglicht.

9. Telekommunikationsanlage nach einem der Ansprüche 6 bis 8, **dadurch gekennzeichnet, dass** der DSL-Anschluss ein ADSL-Anschluss ist.

10. Telekommunikationsanlage nach einem der vorangehenden Ansprüche, **dadurch gekennzeichnet, dass** die Telekommunikationsanlage einen Router (140) aufweist, an den die Rechnereinrichtungen (70, 80) anschließbar ist.

11. Telekommunikationsanlage nach Anspruch 10, **dadurch gekennzeichnet, dass** der Router (140) ein DHCP-Server zur automatischen Vergabe von IP-Netzwerkadressen und/oder eine Fire-Wall-Funktion aufweist.

12. Telekommunikationsanlage nach einem der vorangehenden Ansprüche, **dadurch gekennzeichnet, dass** die Telekommunikationsanlage (10) eine Funkschnittstelle aufweist, über die zumindest eine Rechnereinrichtung per Funkverbindung an die Telekommunikationsanlage (10) anschließbar ist.

13. Telekommunikationsanlage nach Anspruch 12, **dadurch gekennzeichnet, dass** die Funkschnittstelle durch eine Kartenbuchse gebildet ist, die mit dem Netzwerkanschluss in Verbindung steht und in die eine Mobilfunkkarte (200) lösbar einschiebbar ist.

14. Telekommunikationsanlage nach Anspruch 12 oder 13, **dadurch gekennzeichnet, dass** die Kartenbuchse derart ausgestaltet ist, dass eine als Compact-Flashkarte ausgestaltete Mobilfunkkarte (200) in die Telekommunikationsanlage (10) einschiebbar ist.

15. Telekommunikationsanlage nach Anspruch 14, **dadurch gekennzeichnet, dass** die Kartenbuchse eine CF II-Buchse ist.

16. Telekommunikationsanlage nach einem der vorangehenden Ansprüche 12 bis 15, **dadurch gekennzeichnet, dass** die Mobilfunkkarte (200) nach dem DECT-Standard arbeitet.

17. Telekommunikationsanlage nach einem der vorangehenden Ansprüche 12 bis 15, **dadurch gekennzeichnet, dass** die Mobilfunkkarte nach dem WiFi-Standard arbeitet.

18. Verfahren zum Betreiben einer Telekommunikationsanlage, insbesondere nach einem der voranstehenden Ansprüche, **dadurch gekennzeichnet, dass**
- an einen Netzwerkanschluss (30) der Telekommunikationsanlage (10) mindestens zwei Rechnereinrichtungen (70, 80) angeschlossen werden und
- zwischen der der Telekommunikationsanlage (10) und den mindestens zwei Rechnereinrichtungen (70, 80) Sprachdaten bidirektional übertragen werden, und zwar derart, dass jede an die Telekommunikationsanlage (10) angeschlossene Rechnereinrichtung (70, 80) als Telefon und/oder als Faxgerät betreibbar ist, und
- wobei zumindest einer der angeschlossenen Rechnereinrichtungen (70, 80) zumindest eine eigene Telefonnummer zugeordnet wird.

19. Verfahren nach Anspruch 18, **dadurch gekennzeichnet, dass** das Netzwerk als ETHERNET-Netztwerk (40) betrieben wird.

20. Verfahren nach Anspruch 18 oder 19, **dadurch gekennzeichnet, dass** die Sprachdaten transparent übertragen werden.
